# DEMANDE DE BREVET EUROPEEN

(11) **EP 0 554 153 A1**
(43) Date de publication de la demande: **04.08.1993**
(21) Numéro de dépôt: 93400167.8
(22) Date de dépôt: 26.01.1993
(51) Int. Cl.: G02B 6/44, G02B 6/25

(54) **Procédé et dispositif de préhension et de manipulation d'une fibre optique**

(30) Priorité: 27.01.1992 FR 9200822; 27.07.1992 FR 9209233
(71) Demandeur: ALCATEL CABLE INTERFACE, F-08330 Vrigne aux Bois (FR)
(72) Inventeur: Bourhis, Jean-François, F-95150 Taverny (FR); Hakoun, Roland, F-95330 Domont (FR); Mignot, Valérie, F-60240 Chaumont en Vexin (FR); Reichen, Willi c/o CSEM, CH-2007 Neuchatel (CH)
(74) Mandataire: Buffiere, Michelle

(57) **Abrégé**

Procédé de préhension et de manipulation d'une fibre optique pour saisir la fibre puis pour la manipuler, caractérisé en ce qu'il comprend les opérations suivantes :
- on rend une portion de la surface de la fibre (5) solidaire d'une première extrémité (2) d'un élément de préhension et de manipulation (1) par application, à l'aide de l'élément de préhension et de manipulation (1), d'une première variation de température à un moyen intermédiaire de solidarisation (8) interposé entre la fibre (5) et l'élément (1),
- on manipule la fibre (5) en déplaçant l'élément de préhension et de manipulation (1),
- une fois les manipulations terminées, on désolidarise l'élément de préhension et de manipulation (1) de la fibre (5) par application au moyen intermédiaire de solidarisation (8), à l'aide de l'élément et de préhension et de manipulation (1), d'une deuxième variation de température dans le sens opposé à la première variation.

## Description

La présente invention concerne un procédé et un dispositif de préhension et de manipulation d'une fibre optique. Elle se rapporte plus particulièrement à un procédé et un dispositif permettant la préhension et la manipulation d'une fibre optique appartenant à un ruban de fibres optiques.

Compte tenu du développement actuel de l'utilisation des rubans de fibres optiques, dans lesquels des fibres sont placées côte à côte avec des distances entre leurs axes longitudinaux respectifs de l'ordre de 250 µm, la recherche de procédés et de dispositifs associés permettant la préhension et la manipulation d'une fibre d'un ruban indépendamment des autres fibres de ce ruban est particulièrement importante. La préhension et la manipulation ont pour but, comme dans le cas des fibres unitaires, de raccorder l'extrémité d'une fibre à celle d'une autre fibre, ou bien à un composant optique du type guide d'ondes, émetteur, récepteur, diviseur, concentrateur, multiplexeur, modulateur, etc.

On connaît de nombreux procédés et dispositifs correspondants de préhension et de manipulation de fibres unitaires.

Un premier de ces dispositifs utilise une pince de petites dimensions, également appelée micropince, qui permet d'une part de pincer la fibre optique entre deux lames métalliques effilées, solidaires l'une de l'autre par l'une de leurs extrémités et séparées par un ressort, et d'autre part de la manipuler.

La micropince fonctionnant de la même manière qu'une pince classique, elle rend nécessaire l'existence d'un espace suffisamment important autour de la fibre à saisir. La préhension au moyen de la micropince est donc délicate à effectuer dans le cas d'une fibre appartenant à un ruban, du fait de l'espace réduit entre deux fibres voisines du ruban.

D'autre part, la pince n'ayant que deux points de contact sans solidarisation avec la fibre, celle-ci peut se déplacer librement par exemple en rotation autour de l'axe passant par ces deux points. La manipulation est donc peu précise puisqu'il n'y a pas réellement solidarisation de la micropince à la fibre.

Un autre dispositif connu pour la préhension et la manipulation de fibres unitaires permet d'éviter certains inconvénients du dispositif précédent. Ce dispositif utilise une "pipette" qui est solidarisée à la fibre par aspiration. Dans ce cas, puisqu'il y a solidarisation, la fibre ne peut effectuer de mouvements préjudiciables. On peut alors saisir la fibre puis la positionner précisément à l'endroit où le raccordement doit être effectué. Ce dispositif n'est cependant pas encore satisfaisant.

En effet, lors du raccordement de la fibre à un composant optique, on procède en général par collage au moyen d'une colle polymérisable aux ultraviolets. Dans ce cas, les forces développées au moment de la polymérisation sont supérieures à la force de préhension au moyen de la pipette. La fibre a donc tendance à se libérer de la pipette, ce qui modifie le positionnement précis effectué.

On pourrait alors penser à augmenter la dépression d'aspiration. Toutefois, cette solution n'est pas envisageable en pratique du fait des faibles dimensions des fibres à manipuler : une dépression trop forte risque de soumettre la fibre à des contraintes en flexion préjudiciables.

Un procédé connu pour la préhension et la manipulation de deux fibres voisines à connecter respectivement à deux guides d'ondes permet d'éviter les inconvénients précédents. Il s'agit d'un procédé décrit dans l'article intitulé Novel Technique For Connecting Waveguides and Fibers, paru dans le journal "Fiber and Integrated Optics", vol. 9, 1990, pages 124 à 129. Ce procédé utilise une lame mince de silice de petites dimensions, qui est solidarisée à la fibre par collage à l'aide d'une colle polymérisable aux ultraviolets, de sorte que le plan de cette lame soit tangent à la fibre et parallèle à celui contenant les deux guides d'ondes, et que la largeur de la lame soit parallèle à l'axe longitudinal de la fibre. Après collage de la lame à la fibre optique, la fibre est positionnée pour le raccordement à l'aide d'un outil solidaire de la lame, puis raccordée à un composant optique. La lame de silice reste en place une fois le raccordement effectué.

Le procédé précédent n'est toujours pas satisfaisant. D'une part, compte tenu de la position de la lame de silice par rapport au plan des guides d'ondes, il ne permet la préhension de fibres que dans des rubans à deux fibres au maximum. D'autre part, il nécessite de laisser en place après raccordement un élément extérieur fragile et encombrant. D'ailleurs, il n'est pas possible de désolidariser la lame, car le temps (quelques secondes) et la température de chauffage (environ 250°C) nécessaires pour ce faire, combinés à la proximité entre la lame et l'extrémité de la fibre à raccorder, risqueraient d'endommager le raccordement effectué entre la fibre et le composant optique. En effet, les collages au moyen de colles polymérisables aux ultraviolets sont très sensibles aux températures supérieures à 150°C, notamment lorsqu'ils sont soumis à de telles températures pendant plus d'une seconde, c'est-à-dire à de faibles gradients de température en fonction du temps. Enfin, ce procédé requiert l'utilisation de moyens extérieurs complexes permettant la solidarisation de la lame à la fibre.

La présente invention a donc pour but de mettre au point un procédé simple de préhension et de manipulation d'une fibre optique pour maintenir de manière fiable la fibre pendant le raccordement de cette dernière à un composant optique, et désolidariser la fibre une fois le raccordement réalisé sans risquer d'endommager ce dernier. La présente invention a donc pour objet de réaliser un procédé alliant les avantages des différents procédés connus sans en avoir les inconvénients.

Un autre but de la présente invention est de permettre la préhension d'une fibre optique appartenant à un ruban comprenant au moins deux fibres optiques.

La présente invention propose à cet effet un procédé de préhension et de manipulation d'une fibre optique pour saisir ladite fibre selon une direction dite direction de préhension, puis pour la manipuler, caractérisé en ce qu'il comprend les opérations suivantes :
- on rend une portion de la surface de ladite fibre solidaire d'une première extrémité d'un élément de préhension et de manipulation par application, à l'aide dudit élément de préhension et de manipulation, d'une première variation de température à un moyen intermédiaire de solidarisation interposé entre ladite fibre et ledit élément,
- on manipule ladite fibre en déplaçant ledit élément de préhension et de manipulation,
- une fois les manipulations terminées, on désolidarise ledit élément de préhension et de manipulation de ladite fibre par application audit moyen intermédiaire de solidarisation, à l'aide dudit élément et de préhension et de manipulation, d'une deuxième variation de température dans le sens opposé à ladite première variation.

De manière très avantageuse, la première variation de température peut être une diminution de la température du moyen intermédiaire de solidarisation, et la deuxième variation de température une augmentation de la température du moyen intermédiaire de solidarisation.

Selon une première variante du procédé selon l'invention :
- préalablement à l'application de la première variation de température, on chauffe le moyen intermédiaire de solidarisation à l'aide de l'élément de préhension et de manipulation qui est à cet effet un élément chauffant, ce qui entraîne la fluidification du moyen intermédiaire de solidarisation,
- la première variation de température est obtenue par arrêt du chauffage, ce qui fait diminuer la température du moyen intermédiaire de solidarisation et entraîne sa solidification, et ainsi la solidarisation de l'élément chauffant à ladite fibre,
- la deuxième variation de température est obtenue par un nouveau chauffage du moyen intermédiaire de solidarisation à l'aide de l'élément chauffant.

L'élément de préhension et de manipulation de la fibre étant un élément chauffant, le procédé selon l'invention est simple. La solidarisation de l'élément chauffant à la fibre est rapide et assure en outre un maintien ferme et rigide de la fibre pendant les manipulations et surtout pendant le raccordement.

Dans une deuxième variante du procédé selon l'invention, la première variation de température est obtenue par refroidissement du moyen intermédiaire de solidarisation initialement à l'état fluide au-dessous de la température ambiante, pour entraîner la solidification du moyen intermédiaire de solidarisation, et la deuxième variation de température est obtenue par chauffage du moyen intermédiaire de solidarisation pour le rendre de nouveau fluide.

Selon un premier mode de mise en oeuvre possible de la première variante du procédé selon l'invention, la fibre est rendue solidaire de l'élément de préhension et de manipulation à l'aide d'un alliage métallique constituant le moyen intermédiaire de solidarisation, de manière à assurer une soudure entre l'extrémité de cet élément et une portion de la surface de la fibre

La solidarisation par soudure assure un maintien ferme et rigide de la fibre, et elle est plus fiable pendant les manipulations et le raccordement qu'une solidarisation par collage tel que celle de la lame de silice à la fibre.

Pour effectuer la solidarisation à l'aide d'un alliage métallique, la fibre optique à saisir peut être préalablement métallisée sur sa surface extérieure au moyen de l'alliage métallique, et la soudure est effectuée par chauffage de cet alliage au moyen de l'élément de préhension et de manipulation pour le fluidifier, puis par arrêt du chauffage entraînant la solidification de l'alliage.

La métallisation de la fibre est une opération classique effectuée généralement pour souder une fibre optique dans un vé de guidage. Elle ne détériore pas les caractéristiques de transmission de la fibre.

Selon une autre méthode possible pour réaliser la soudure, un alliage métallique est disposé à l'extrémité de l'élément de préhension et de manipulation destinée à venir en contact avec la fibre, et la soudure est effectuée par excitation ultrasonique de l'alliage au moyen de l'élément de préhension et de manipulation adapté à cet effet, pour permettre à l'alliage d'adhérer à la surface de la fibre, puis par chauffage au moyen de l'élément de préhension et de manipulation pour fluidifier cet alliage, et enfin par arrêt du chauffage pour solidariser l'élément chauffant à la fibre.

Dans le mode de mise en oeuvre précédemment décrit, lorsque l'alliage métallique est tel qu'il se liquéfie à une température voisine de 250°C, l'élément chauffant est désolidarisé facilement de la fibre par chauffage à une température environ égale à 250°C pendant une durée inférieure à une seconde. Ainsi, le gradient de température en fonction du temps étant très élevé, même si l'élément chauffant est solidarisé à la fibre à proximité de l'extrémité à raccorder, il n'y a pas de risque d'endommager le raccordement de la fibre à un composant optique.

L'alliage métallique servant à la soudure peut être par exemple un alliage à l'étain-plomb, à l'indium-plomb ou à l'indium-étain.

Selon un deuxième mode de mise en oeuvre du la première variante de l'invention, la fibre est rendue solidaire de l'élément de préhension et de manipulation à l'aide d'un adhésif thermoplastique constituant le moyen intermédiaire de solidarisation.

La solidarisation à l'aide d'un adhésif thermoplastique assure un maintien aussi ferme et rigide de la fibre que la solidarisation par soudure, et elle est également plus fiable pendant les manipulations et le raccordement qu'une solidarisation par collage tel que celle d'une lame de silice à la fibre.

Dans le cas de l'utilisation d'un adhésif thermoplastique, lorsque l'adhésif thermoplastique est tel qu'il se liquéfie à une température comprise entre 150 et 200°C, l'élément de préhension et de manipulation peut être désolidarisé facilement de la fibre par chauffage à une température de l'ordre de 150 à 200°C pendant une durée inférieure à une seconde. Ainsi, le gradient de température en fonction du temps étant très élevé, même si l'élément chauffant est solidarisé à la fibre à proximité de l'extrémité à raccorder, il n'y a pas de risque d'endommager le raccordement de la fibre à un composant optique.

Avantageusement, l'adhésif thermoplastique peut être choisi parmi un copolymère d'éthylène et d'acétate de vinyle et un produit de type cire d'abeille.

Selon un mode de mise en oeuvre avantageux de la deuxième variante du procédé selon l'invention :
- la fibre est rendue solidaire de l'élément de préhension et de manipulation par condensation puis solidification de l'humidité ambiante située entre la fibre et l'extrémité de l'élément de préhension et manipulation, l'humidité ambiante constituant le moyen intermédiaire de solidarisation,
- la fibre est maintenue solidaire de l'élément de préhension et de manipulation par maintien du moyen intermédiaire à une température à laquelle il se trouve sous forme solide,
- la fibre est désolidarisée de l'élément de préhension et de manipulation par chauffage du moyen intermédiaire de solidarisation à l'aide de l'élément jusqu'à ce que le moyen intermédiaire de solidarisation se trouve de nouveau à l'état fluide.

Selon un autre mode de mise en oeuvre avantageux de la deuxième variante du procédé de l'invention :
- la fibre est rendue solidaire de l'élément de préhension et de manipulation par congélation d'un gel adapté constituant le moyen intermédiaire de solidarisation et disposé entre la fibre et l'extrémité de l'élément de préhension et manipulation, l'humidité ambiante constituant le moyen intermédiaire de solidarisation,
- la fibre est maintenue solidaire de l'élément de préhension et de manipulation par maintien du moyen intermédiaire à une température à laquelle il se trouve sous forme solide,
- la fibre est désolidarisée de l'élément de préhension et de manipulation par chauffage du moyen intermédiaire de solidarisation à l'aide de l'élément jusqu'à ce que le moyen intermédiaire de solidarisation se trouve de nouveau à l'état fluide.

Selon une caractéristique additionnelle, dans la deuxième variante du procédé selon l'invention, les variations de température ont une amplitude de l'ordre de 30°C.

Le procédé selon l'invention peut servir à la préhension et la manipulation d'une fibre optique appartenant à un ruban de fibres optiques contenant au moins deux fibres optiques disposées côte à côte avec leurs axes longitudinaux respectifs parallèles entre eux.

Dans ce cas, la direction de préhension de la fibre est orthogonale au plan du ruban.

Selon une caractéristique supplémentaire, l'extrémité de l'élément de préhension et de manipulation destinée à être rendue solidaire de la fibre est constituée d'une lamelle métallique rectangulaire de longueur environ égale à 1 mm et de largeur environ égale à 100 µm disposée de sorte que sa longueur soit parallèle à l'axe longitudinal de la fibre. Du fait de ses petites dimensions, l'élément de préhension et de manipulation peut facilement saisir des fibres appartenant à un ruban de fibres, en particulier quand l'espacement entre deux fibres voisines est de 125 µm.

La présente invention a également pour objet un dispositif de préhension et de manipulation d'une fibre optique mettant en oeuvre l'un des procédés précédents, dans lequel l'élément de préhension et de manipulation est constitué par exemple soit d'un élément intrinsèquement chauffant, soit d'un élément de refroidissement.

Avantageusement, l'élément chauffant constitue une résistance appartenant à un circuit électrique, la puissance nécessaire au chauffage étant obtenue par effet Joule, et l'arrêt du chauffage étant obtenu en déconnectant l'élément chauffant du circuit électrique.

Par exemple, l'élément chauffant peut être constitué d'une thermode appartenant à un fer à souder du type à souder les composants électroniques.

Avantageusement encore, l'élément de refroidissement peut être solidaire d'un élément thermoélectrique de refroidissement par effet Peltier.

L'élément de préhension et de manipulation peut être par ailleurs solidaire d'une platine micrométrique qui permet de le déplacer et de le manipuler.

L'élément de préhension et de manipulation peut en outre être destiné à être rendu solidaire de la fibre par l'une de ses extrémités qui peut être constituée d'une lamelle métallique rectangulaire de longueur environ égale à 1 mm et de largeur environ égale à 100 µm.

Selon une caractéristique additionnelle, l'élément de préhension et manipulation est constitué d'une lame métallique destinée à être rendue solidaire de la fibre par l'une de ses extrémités, et de rigidité accrue à l'aide de deux pièces en forme de coins l'enserrant au voisinage de cette extrémité. Ces pièces sont avantageusement constituées d'un matériau de faible conductivité thermique.

D'autres caractéristiques et avantages de la présente invention apparaîtront dans la description suivante d'un dispositif de mise en oeuvre du procédé selon l'invention, donnée à titre illustratif et nullement limitatif. Dans les figures suivantes :
- la figure 1 représente en perspective un élément chauffant utilisé dans les premier et deuxième modes de mise en oeuvre d'une première variante du procédé selon l'invention,
- la figure 2 représente en vue de face une fibre optique rendue solidaire de l'élément chauffant de la figure 1 selon le premier mode de mise en oeuvre de la première variante du procédé de l'invention,
- la figure 3 représente schématiquement et en vue de face une fibre optique rendue solidaire d'un élément de refroidissement selon la deuxième variante du procédé selon l'invention.

Dans ces figures, les éléments communs portent les mêmes numéros de référence.

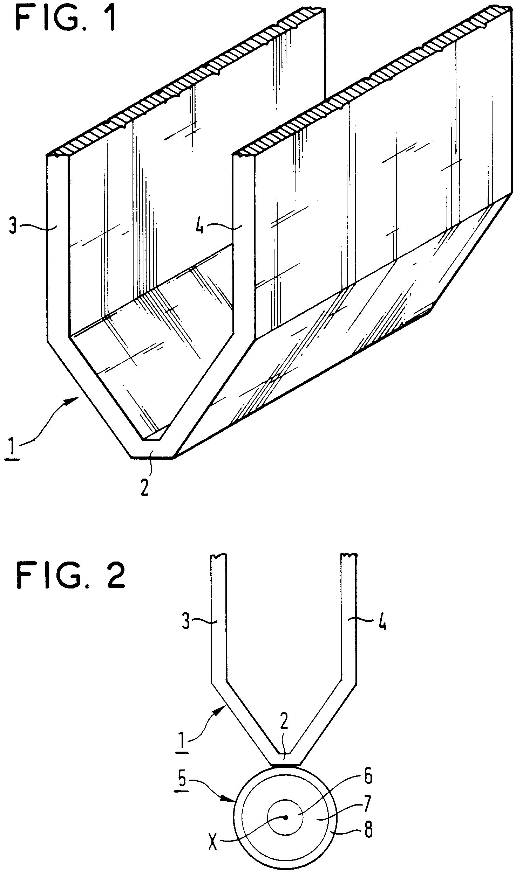

On voit en figure 1 une thermode 1 de forme classique. La thermode est l'élément chauffant d'un fer à souder du type à souder les composants électroniques par exemple. Elle est solidaire d'un dispositif de manipulation connu, par exemple une platine micrométrique (non représentée), utilisé par exemple dans les appareils pour la soudure de composants électroniques et permettant de déplacer et de manipuler la thermode 1. La thermode 1 sert ainsi d'élément de préhension et de manipulation.

Une des extrémités de !a thermode 1 est constituée d'une lamelle rectangulaire 2 de 1 mm de longueur et de 100 µm de largeur. La lamelle 2 constitue la zone de préhension de la fibre à saisir et manipuler, comme on le verra plus loin.

Pour permettre la manipulation de la fibre saisie, la lamelle 2 se prolonge au niveau de ses grands côtés par deux bras 3 et 4 sensiblement orthogonaux à son plan. Les bras 3 et 4 sont reliés au dispositif de manipulation. L'ensemble de la lamelle 2 et des bras 3 et 4 constitue une seule pièce métallique.

On a représenté en figure 2 la thermode 1 solidaire d'une fibre optique 5 à saisir et manipuler selon l'invention. La fibre optique 5 comporte un coeur optique 6, une gaine optique 7, et une gaine extérieure de protection non visible sur la figure 2 car elle a été retirée de la zone extrême de la fibre à raccorder. Sur cette zone extrême ainsi dénudée a été déposée, par vaporisation par exemple, une couche 8 d'un alliage à l'étain-plomb servant comme on le verra dans la suite de moyen intermédiaire de solidarisation de la thermode 1 à la fibre 5. L'épaisseur de la couche 8 est de l'ordre du dixième de micron.

Lorsqu'elle est connectée à un circuit électrique adapté, la thermode 1 joue le rôle d'une résistance. La chaleur dégagée par effet Joule par la thermode 1, dont la lamelle 2 est placée au contact de la zone extrême métallisée la fibre 5 de sorte que sa longueur soit parallèle à l'axe longitudinal X de la fibre 5, permet de fluidifier, et en pratique de faire fondre, l'alliage constituant la couche 8. La thermode 1 est ensuite isolée du circuit électrique afin de faire cesser l'apport de chaleur. On applique ainsi à l'alliage métallique 8 une diminution de température, ce qui entraîne la solidification de cet alliage métallique et ainsi la solidarisation de la thermode 1 à la fibre 5 ; la fibre 5 est alors soudée à la thermode 1 et donc maintenue fermement par cette dernière, et le positionnement puis le raccordement de son extrémité à un guide d'ondes par exemple (non représenté) peuvent être effectués.

En général, le raccordement est réalisé au moyen d'une colle polymérisable aux ultraviolets appliquée sur la face extrême de la fibre 5 et venant en contact une fois le positionnement effectué avec l'une des entrées du guide d'ondes. On soumet alors l'ensemble aux rayonnements ultraviolets pour solidariser la fibre 5 au guide d'ondes.

Une fois le raccordement effectué, il suffit de remettre la thermode 1 en relation avec le circuit électrique initial pour la faire chauffer et appliquer ainsi à l'alliage métallique 8 une augmentation de température. Un chauffage à la température de 250°C environ pendant une durée inférieure à une seconde suffit à fluidifier (ici liquéfier) de nouveau l'alliage de soudure et donc à désolidariser la thermode 1 de la fibre 5. Un tel chauffage n'est pas préjudiciable au raccordement effectué entre la fibre et le guide d'ondes, puisque les colles polymérisables aux ultraviolets ne sont sensibles aux températures de l'ordre de 250°C que si ces dernières sont maintenues pendant des durées supérieures à la seconde.

Grâce au procédé selon l'invention, la précision du positionnement effectué est de l'ordre du dixième de micron, c'est-à-dire que les mésalignements dans le plan de la face extrême de la fibre 5 ont une amplitude maximale de l'ordre du dixième de micron.

On vient de décrire, en relation avec les figures 1 et 2, un premier mode de mise en oeuvre de la première variante de la présente invention, dans lequel on utilise comme moyen intermédiaire de solidarisation de l'élément chauffant à la fibre un alliage métallique.

Selon un second mode de mise en oeuvre de la première variante de l'invention, on peut utiliser à la place de l'alliage métallique précédent un adhésif thermoplastique. Il n'est plus alors nécessaire de métalliser la fibre, comme représenté en 8 en figure 2. On place l'adhésif thermoplastique sur la lamelle 2, on le fait fondre en chauffant la thermode 1, puis on cesse de chauffer (application d'une diminution de température) de sorte que l'adhésif thermoplastique se solidifie, ce qui permet de solidariser la thermode 1 à la fibre 5. Le reste des opérations se déroule de la même manière que décrite précédemment, excepté la désolidarisation.

Un chauffage à la température de 150 à 200°C environ pendant une durée inférieure à une seconde suffit à faire fondre l'adhésif thermoplastique (application d'une augmentation de température) et donc à désolidariser la thermode 1 de la fibre 5. Un tel chauffage n'est pas préjudiciable au raccordement effectué entre la fibre et le guide d'ondes, puisque les colles polymérisables aux ultraviolets ne sont sensibles aux températures de l'ordre de 150 à 200°C que si ces dernières sont maintenues pendant des durées supérieures à la seconde.

On peut utiliser, dans le deuxième mode de mise en oeuvre de la première variante de l'invention, tout adhésif thermoplastique capable d'adhérer à la silice constituant la gaine optique 7 de la fibre 5. Notamment, on peut choisir une cire "Cristalbond 509" (marque déposée), commercialisée par la société AREMCO.

Grâce au mode de mise en oeuvre précédent, la précision du positionnement effectué est également de l'ordre du dixième de micron.

L'utilisation d'un adhésif thermoplastique pour assurer la solidarisation permet d'effectuer plusieurs solidarisations successives à l'aide de la même quantité initiale d'adhésif. En effet, lorsque la thermode est désolidarisée de la fibre, une grande partie de l'adhésif reste solidaire de la thermode, et seule une faible quantité reste sur la fibre. Cette caractéristique permet avantageusement de réaliser une économie non négligeable sur l'adhésif employé.

Par ailleurs, avec un adhésif thermoplastique, les opérations de préhension et de désolidarisation sont très simples à effectuer : il suffit de placer une quantité déterminée de matériau (une goutte par exemple) sur la lamelle de la thermode, de chauffer pour faire fluidifier, de laisser refroidir pour solidariser, et enfin de chauffer encore pour désolidariser.

Les adhésifs thermoplastiques sont très peu sensibles à l'influence du milieu ambiant, et sont donc d'un emploi aisé ne nécessitant pas de précautions particulières.

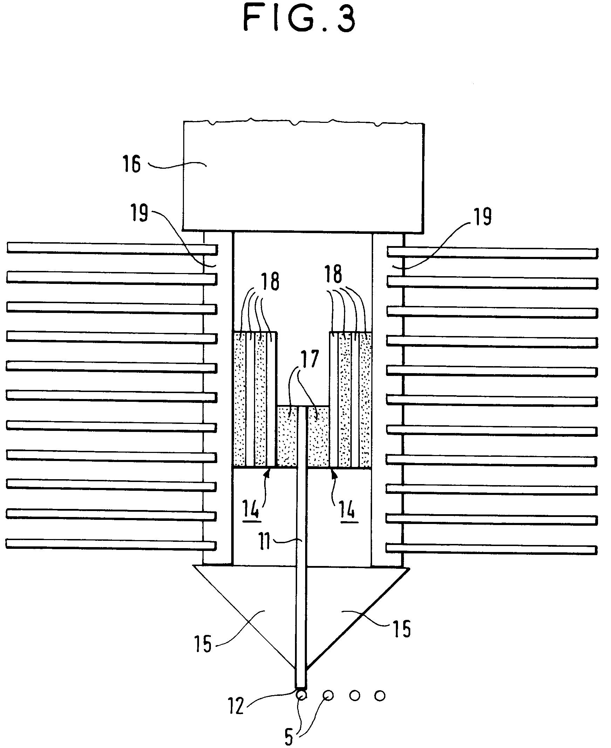

L'élément de préhension et de manipulation de la fibre 5 selon une deuxième variante de l'invention est illustré en figure 3. Cet élément de préhension et de manipulation, référencé 10, comporte une lame métallique 11 de grande rigidité, ayant par exemple une extrémité 12 plate et étroite pour permettre la préhension de la fibre optique 5. La lame 11 est montée en relation avec un élément thermoélectrique de refroidissement à effet Peltier 14.

La rigidité de la lame 11 est augmentée par deux pièces 15 en forme de coins l'enserrant au voisinage de son extrémité 12. Les pièces 15 sont constituées d'un matériau de faible conductivité thermique.

L'élément thermoélectrique de refroidissement 14 est lui-même constitué de deux lames de petites dimensions 17 situées de part et d'autre de la lame 11 au voisinage de son extrémité opposée à l'extrémité 12, et d'éléments diffuseurs 18 situés de part et d'autre des lames 17. Les zones sombres sont les zones chaudes de l'élément 14, et les zones claires sont les zones froides de cet élément. De part et d'autre des éléments 18, on a disposé des radiateurs 19.

L'extrémité 12 de la lame 11 peut également être de la forme représentée en figure 1, ou bien simplement de section rectangulaire adaptée de manière à ne saisir qu'une fibre à la fois.

Enfin, l'élément de préhension et de manipulation 10 est monté sur un actuateur 16 de haute précision.

Le procédé selon l'invention dans sa deuxième variante se déroule de la manière suivante.

Lorsque l'extrémité 12 de la lame 11 se trouve à proximité de la fibre 5 à saisir, l'élément Peltier 14 applique à la lame 11, et donc au milieu l'environnant, une diminution de température en refroidissant cette dernière par rapport à la température ambiante. Ceci provoque la condensation de l'humidité ambiante et sa solidification entre la fibre 5 et l'extrémité 12. Une liaison mécanique est ainsi établie de façon très rigide entre la fibre 5 et l'élément 10. La fibre 5 peut dès lors être déplacée en position voulue, maintenue en place fixement et résister aux forces dues par exemple à la polymérisation d'une colle ou au choc d'une soudure lors de l'opération de raccordement. Une fois le raccordement réalisé, la lame 11 est réchauffée au moins jusqu'à la température ambiante. Une augmentation de température est donc appliquée à l'eau solidifiée entre l'extrémité 12 et la fibre 5, ce qui permet à cette dernière de se désolidariser de l'élément de préhension et de manipulation 10.

Avantageusement, le rôle de l'humidité ambiante peut aussi être joué par un gel que l'on dispose soit sur la fibre 5, soit sur l'extrémité 12 de la lame 11, et que l'on solidifie puis fluidifie par application respectivement d'une diminution et d'une augmentation de température.

La troisième variante du procédé selon l'invention présente les mêmes avantages que la première variante décrite précédemment.

Tout comme le deuxième mode de mise en oeuvre de la première variante, il ne nécessite pas de préparation de la fibre à saisir et manipuler. En outre, il rend inutile un apport de matière pour la solidarisation, la vapeur d'eau ambiante étant suffisante.

Tout comme les modes de mise en oeuvre précédents, il n'est pas préjudiciable pour un composant optique auquel la fibre doit être raccordée, ne laisse pas de traces et ne nécessite pas de nettoyage ultérieur.

Les variations de température appliquées pour la préhension et la désolidarisation ont une très faible amplitude (moins de 30°C). Ceci permet donc d'appliquer le procédé selon l'invention à des manipulations exigeant des ajustements de haute précision, car les effets d'expansion thermique durant la préhension et la désolidarisation sont négligeables.

Bien évidemment, l'invention n'est pas limitée au mode de réalisation qui vient d'être décrit.

En particulier, dans le premier mode de mise en oeuvre de la première variante de l'invention, il n'est pas nécessaire de métalliser la surface de la zone extrême de la fibre à raccorder. On peut en effet solidariser la thermode 1 à la fibre 5 au moyen d'un alliage métallique disposé sur la lamelle 2 et appliqué à la fibre 5. Plus précisément, après mise en contact de la lamelle 2 et de la fibre 5, on fait subir à l'alliage métallique précédent une excitation ultrasonique permettant de le faire adhérer à la fibre 5, puis on chauffe l'ensemble et l'on cesse de chauffer de la même manière que précédemment pour solidariser par soudure la fibre 5 à la thermode 1. Afin de réaliser l'excitation ultrasonique de l'alliage à souder, la thermode 1 est munie de moyens adaptés et bien connus.

Le moyen intermédiaire de solidarisation utilisé peut être quelconque, du moment que son chauffage au moyen de l'élément chauffant entraîne sa fluidification, et notamment sa liquéfaction, et que l'arrêt du chauffage entraîne sa solidification.

L'alliage utilisé pour effectuer la soudure peut être un alliage métallique quelconque adapté à la soudure comme par exemple un alliage à l'étain-plomb, un alliage à l'indium-étain ou encore un alliage à l'indium-plomb.

D'autre part, dans le deuxième mode de mise en oeuvre de la première variante de l'invention, l'adhésif thermoplastique utilisé pour effectuer la solidarisation peut être par exemple un produit de type cire d'abeille, bien connu de l'homme de l'art.

On a décrit comme exemple de réalisation de l'élément chauffant des deux premiers modes de mise en oeuvre du procédé selon l'invention une thermode, mais il est bien évident que tout autre élément chauffant peut être utilisé sans sortir du cadre de l'invention.

Il en est de même pour l'élément refroidissant de la troisième variante de l'invention.

Les dimensions de la lamelle de l'élément de préhension et de manipulation destinée à venir au contact de la fibre ne sont pas critiques. Il faut néanmoins que ces dimensions soient compatibles avec l'espacement entre la fibre à raccorder et les fibres voisines lorsqu'il s'agit du raccordement d'un ruban de fibres optiques.

En outre, dans les exemples décrits, la direction de préhension de la fibre est orthogonale à l'axe longitudinal de cette dernière. Cette disposition n'est nécessaire que dans le cas où la fibre optique à saisir et à manipuler appartient à un ruban de fibres optiques parallèles entre elles.

Enfin, on pourra remplacer tout moyen par un moyen équivalent sans sortir du cadre de l'invention.

## Revendications

**1/** Procédé de préhension et de manipulation d'une fibre optique pour saisir ladite fibre selon une direction dite direction de préhension, puis pour la manipuler, caractérisé en ce qu'il comprend les opérations suivantes :
- on rend une portion de la surface de ladite fibre (5) solidaire d'une première extrémité (2) d'un élément de préhension et de manipulation (1) par application, à l'aide dudit élément de préhension et de manipulation (1), d'une première variation de température à un moyen intermédiaire de solidarisation (8) interposé entre ladite fibre (5) et ledit élément (1),
- on manipule ladite fibre (5) en déplaçant ledit élément de préhension et de manipulation (1),
- une fois les manipulations terminées, on désolidarise ledit élément de préhension et de manipulation (1) de ladite fibre (5) par application audit moyen intermédiaire de solidarisation (8), à l'aide dudit élément et de préhension et de manipulation (1), d'une deuxième variation de température dans le sens opposé à ladite première variation.

**2/** Procédé selon la revendication 1 caractérisé en ce que ladite première variation de température est une diminution de la température dudit moyen intermédiaire de solidarisation, et en ce que ladite deuxième variation de température est une augmentation de la température dudit moyen intermédiaire de solidarisation.

**3/** Procédé selon la revendication 2 caractérisé en ce que :
- préalablement à l'application de ladite première variation de température, on chauffe ledit moyen intermédiaire de solidarisation (8) à l'aide dudit élément de préhension et de manipulation (1) qui est à cet effet un élément chauffant, ce qui entraîne la fluidification dudit moyen intermédiaire de solidarisation (8),
- ladite première variation de température est obtenue par arrêt du chauffage, ce qui fait diminuer la température dudit moyen intermédiaire de solidarisation (8) et entraîne sa solidification, et ainsi la solidarisation dudit élément chauffant (1) à ladite fibre (5),
- ladite deuxième variation de température est obtenue par un nouveau chauffage dudit moyen intermédiaire de solidarisation (8) à l'aide dudit élément chauffant (1).

**4/** Procédé selon l'une des revendications 1 ou 2 caractérisé en ce que ladite première variation de température est obtenue par refroidissement dudit moyen intermédiaire de solidarisation initialement à l'état fluide au-dessous de la température ambiante, pour entraîner la solidification dudit moyen intermédiaire de solidarisation, et en ce que ladite deuxième variation de température est obtenue par chauffage dudit moyen intermédiaire de solidarisation pour le rendre de nouveau fluide.

**5/** Procédé selon l'une des revendications 1 à 3 caractérisé en ce que ladite fibre (5) est rendue solidaire dudit élément de préhension et de manipulation (1) à l'aide d'un alliage métallique (8) constituant ledit moyen intermédiaire de solidarisation, de manière à assurer une soudure entre l'extrémité (2) dudit élément (1) et une portion de la surface de ladite fibre (5).

**6/** Procédé selon la revendication 5 caractérisé en ce que ladite fibre optique (5) à saisir est préalablement métallisée (8) sur sa surface extérieure au moyen dudit alliage métallique, ladite soudure étant effectuée par chauffage dudit alliage au moyen dudit élément de préhension et manipulation (1), qui est à cet effet un élément chauffant, pour fluidifier ledit alliage, puis par arrêt dudit chauffage entraînant la solidification dudit alliage.

**7/** Procédé selon la revendication 5 caractérisé en ce qu'un alliage métallique est disposé à l'extrémité (2) dudit élément de préhension et de manipulation (1) destinée à venir en contact avec ladite fibre (5), et en ce que ladite soudure est effectuée par excitation ultrasonique dudit alliage au moyen dudit élément (1) adapté à cet effet, pour permettre audit alliage d'adhérer à la surface de ladite fibre (5), puis par chauffage au moyen dudit élément de préhension et de manipulation (1) qui est à cet effet un élément chauffant, pour fluidifier ledit alliage, et enfin par arrêt dudit chauffage pour solidariser ledit élément de préhension et manipulation (1) à ladite fibre (5).

**8/** Procédé selon l'une des revendications 5 à 7 caractérisé en ce que ledit alliage métallique est tel qu'il se liquéfie à une température voisine de 250°C, de sorte que ledit élément (1) est désolidarisé de ladite fibre (5) par chauffage à une température environ égale à 250°C pendant une durée inférieure à une seconde.

**9/** Procédé selon l'une des revendications 5 à 8 caractérisé en ce que ledit alliage métallique est choisi parmi un alliage à l'étain-plomb, un alliage à l'indium-plomb et un alliage à l'indium-étain.

**10/** Procédé selon l'une des revendications 1 à 3 caractérisé en ce que ladite fibre (5) est rendue solidaire dudit élément de préhension et de manipulation (1) à l'aide d'un adhésif thermoplastique constituant ledit moyen intermédiaire de solidarisation.

**11/** Procédé selon la revendication 10 caractérisé en ce que ledit adhésif thermoplastique est tel qu'il se liquéfie à une température comprise entre 150 et 200°C, de sorte que ledit élément de préhension et de manipulation (1), qui est à cet effet un élément chauffant, est désolidarisé de ladite fibre (5) par chauffage à une température comprise entre 150 et 200°C pendant une durée inférieure à une seconde.

**12/** Procédé selon l'une des revendications 10 ou 11 caractérisé en ce que ledit adhésif thermoplastique est choisi parmi un copolymère d'éthylène et d'acétate de vinyle et un produit de type cire d'abeille.

**13/** Procédé selon la revendication 4 caractérisé en ce que :
- ladite fibre (5) est rendue solidaire dudit élément de préhension et de manipulation (10) par condensation puis solidification de l'humidité ambiante située entre ladite fibre (5) et l'extrémité (12) dudit élément de préhension et manipulation (10), l'humidité ambiante constituant ledit moyen intermédiaire de solidarisation,
- ladite fibre (5) est maintenue solidaire dudit élément (10) par maintien dudit moyen intermédiaire à une température à laquelle il se trouve sous forme solide,
- ladite fibre (5) est désolidarisée dudit élément (10) par chauffage dudit moyen intermédiaire de solidarisation à l'aide dudit élément (10) jusqu'à ce que ledit moyen intermédiaire de solidarisation se trouve de nouveau à l'état fluide.

**14/** Procédé selon la revendication 4 caractérisé en ce que :
- ladite fibre (5) est rendue solidaire dudit élément de préhension et de manipulation (10) par congélation d'un gel adapté constituant ledit moyen intermédiaire de solidarisation et disposé entre ladite fibre et l'extrémité dudit élément de préhension et de manipulation (10),
- ladite fibre (5) est maintenue solidaire dudit élément (10) par maintien dudit moyen intermédiaire à une température à laquelle il se trouve sous forme solide,
- ladite fibre (5) est désolidarisée dudit élément (10) par chauffage dudit moyen intermédiaire de solidarisation à l'aide dudit élément (10) jusqu'à ce que ledit moyen intermédiaire de solidarisation se trouve de nouveau à l'état fluide.

**15/** Procédé selon l'une des revendications 13 ou 14 caractérisé en ce que lesdites variations de température ont une amplitude de l'ordre de 30°C.

**16/** Procédé selon l'une des revendications 1 à 15 caractérisé en ce que ledit élément de préhension et manipulation (1) est utilisé pour la préhension et la manipulation d'une fibre optique appartenant à un ruban de fibres optiques contenant au moins deux fibres optiques disposées côte à côte avec leurs axes longitudinaux respectifs parallèles entre eux.

**17/** Procédé selon la revendication 16 caractérisé en ce que ladite direction de préhension de ladite fibre est orthogonale au plan dudit ruban.

**18/** Procédé selon l'une des revendications 1 à 17 caractérisé en ce que l'extrémité (2, 12) dudit élément de préhension et de manipulation (1, 10) destinée à être rendue solidaire de ladite fibre (5) est constituée d'une lamelle métallique rectangulaire (2, 12) de longueur environ égale à 1 mm et de largeur environ égale à 100 µm, disposée sur ladite fibre de sorte que ladite largeur soit parallèle à l'axe longitudinal de ladite fibre (5).

**19/** Dispositif de préhension et de manipulation d'une fibre optique pour la mise en oeuvre du procédé selon l'une des revendications 1 à 18, caractérisé en ce qu'il comporte un élément de préhension et de manipulation de ladite fibre.

**20/** Dispositif de préhension et de manipulation d'une fibre optique pour la mise en oeuvre du procédé selon l'une des revendications 5 à 12 caractérisé en ce que ledit élément de préhension et de manipulation est constitué d'un élément chauffant (1).

**21/** Dispositif selon la revendication 20 caractérisé en ce que ledit élément chauffant (1) constitue une résistance appartenant à un circuit électrique, la puissance nécessaire au chauffage étant obtenue par effet Joule, et l'arrêt du chauffage étant obtenu en déconnectant ledit élément chauffant (1) dudit circuit électrique.

**22/** Dispositif selon l'une des revendications 20 ou 21 caractérisé en ce que ledit élément chauffant (1) est constitué d'une thermode appartenant à un fer à souder du type à souder les composants électroniques.

**23/** Dispositif de préhension et de manipulation d'une fibre optique pour la mise en oeuvre du procédé selon l'une des revendications 13 à 15 caractérisé en ce que ledit élément de préhension et manipulation est constitué d'un élément de refroidissement.

**24/** Dispositif selon la revendication 23 caractérisé en ce que ledit élément de refroidissement est solidaire d'un élément thermoélectrique de refroidissement par effet Peltier.

**25/** Dispositif selon l'une des revendications 19 à 24 caractérisé en ce que ledit élément de préhension et de manipulation (1) est par ailleurs solidaire d'une platine micrométrique qui permet de le déplacer et de le manipuler.

**26/** Dispositif selon l'une des revendications 19 à 25 caractérisé en ce que ledit élément préhension et de manipulation (1) est destiné à être rendu solidaire de ladite fibre (5) par l'une de ses extrémités (2) constituée d'une lamelle métallique rectangulaire de longueur environ égale à 1 mm et de largeur environ égale à 100 µm.

**27/** Dispositif selon l'une des revendications 19 à 26 caractérisé en ce que ledit élément de préhension et manipulation est constitué d'une lame métallique (11) destinée à être rendue solidaire de ladite fibre par l'une de ses extrémités (12), et de rigidité accrue à l'aide de deux pièces (15) en forme de coins l'enserrant au voisinage de ladite extrémité (12).

**28/** Dispositif selon la revendication 27 caractérisé en ce que lesdites pièces (15) en forme de coins sont constituées d'un matériau de faible conductivité thermique.
